# EUROPÄISCHE PATENTSCHRIFT

(11) **EP 3 401 538 B1**
(45) Veröffentlichungstag und Bekanntmachung des Hinweises auf die Patenterteilung: **22.11.2023**
(21) Anmeldenummer: 18171732.3
(22) Anmeldetag: 11.05.2018
(51) Int. Cl.: F16J 15/3288, F02M 26/50, F16J 15/22, F02M 26/11, F02M 26/67, F02M 26/74

(54) **ABGASVENTIL FÜR EINE VERBRENNUNGSKRAFTMASCHINE**
EXHAUST VALVE FOR A COMBUSTION ENGINE
SOUPAPE DE GAZ D'ÉCHAPPEMENT POUR UN MOTEUR À COMBUSTION INTERNE

(30) Priorität: 12.05.2017 DE 102017110320
(43) Veröffentlichungstag der Anmeldung: 14.11.2018
(73) Patentinhaber: Pierburg GmbH, 41460 Neuss (DE)
(72) Erfinder: Vierkotten, Dirk, 53804 Much (DE); Paffrath, Holger, 50259 Pulheim (DE); Gerards, Hans, 52538 Gangelt (DE); Klass, Kirill, 45239 Essen (DE); Reimers, Thorsten, 40670 Meerbusch (DE); Sutty, Patrick, 40477 Düsseldorf (DE)
(74) Vertreter: terpatent Patentanwälte ter Smitten Eberlein-Van Hoof Rütten Daubert

(56) Entgegenhaltungen:
- WO-A1-2016/075093
- CN-B- 104 100 418
- CN-U- 203 146 148
- DE-A1-102012 210 468
- DE-A1-102015 111 324
- JP-A- H06 280 686
- US-A1- 2003 006 390
- US-A1- 2011 094 481

## Beschreibung

Die Erfindung betrifft ein Abgasventil für eine Verbrennungskraftmaschine mit einem Aktor, einer Ventilstange, welche mittels des Aktors bewegbar ist, einem Ventilkörper, der an der Ventilstange befestigt ist, einem Ventilsitz, auf den der Ventilkörper absenkbar ist und von dem der Ventilkörper abhebbar ist, einer Führungsbuchse, welche in einem Gehäuse angeordnet ist und über welches die Ventilstange im Gehäuse gelagert ist und Dichtmitteln zur Abdichtung eines Spaltes zwischen der Führungsbuchse und der Ventilstange.

Derartige Abgasventile werden insbesondere als Abgasrückführventile zur Regelung eines in die Zylinder des Verbrennungsmotors zurückgeführten Abgasstromes verwendet, der in den Zylindern erneut zur Reduzierung der Stickstoffemissionen der Verbrennung zugeführt wird.

Diese Ventile werden üblicherweise als Hubventile ausgeführt, bei denen ein an einer Ventilstange befestigter Ventilkörper von einem Ventilsitz zwischen einem Einlass und einem Auslass abhebbar ist oder auf diesen absenkbar ist. Abhängig von der vorhandenen Motorlast wird so der freie Querschnitt zwischen dem Einlass und dem Auslass geregelt, um einen optimalen Abgasstrom zurückzuführen. Für eine möglichst genaue Regelung werden zumeist elektromotorische Aktoren mit nachgeschalteten Getrieben zur Betätigung der Ventilstange verwendet.

Problematisch sind jedoch die korrosiven Gase sowie die im Abgasstrom enthaltenen Partikel, beispielsweise Rußpartikel im Abgasstrom eines Dieselmotors sowie die vorhandene thermische Belastung der Ventile und deren Aktoren. Diese setzen sich an der Ventilstange beziehungsweise zwischen der Ventilstange und der Führungsbuchse ab und führen zu einer Schwergängigkeit des Ventils. Zusätzlich gelangen heiße Abgasströme entlang der Ventilstange zum Aktor und können dort zu einer thermischen Überlastung führen.

Daher sind verschiedene Möglichkeiten zur Reduzierung der Ablagerungen und zur Abdichtung der Ventilstange bekannt geworden. So wird in der DE 10 2010 035 622 A1 ein Abgasrückführventil vorgeschlagen, bei dem an der zum Aktor weisenden Seite der Führungsbuchse ein Radialwellenlippendichtring angeordnet, über den das Eindringen eines Gasstroms oder von Partikeln in den Aktor vermieden werden soll. Dieser weist jedoch eine eingeschränkte thermische Belastbarkeit auf. Zusätzlich weist die Führungsbuchse einen zur Ventilstange gewandten Abschnitt verkleinerten Durchmessers auf, um Ablagerungen von der Ventilstange abzuschaben, bevor diese in den Spalt zwischen Ventilstange und Führungsabschnitt der Buchse gelangen. Aus der DE 10 2015 111 324 A1 ist eine Abschirmhülse bekannt, die zwischen der Führungsbuchse und dem Ventilkörper angeordnet ist, um die Ablagerungen von der Ventilstange zu entfernen. Bei dieser Form der Abschirmhülse besteht jedoch das Problem, dass an der Ventilstange Riefen entstehen können, die die Führungsbuchse beschädigen. Eine Abdichtung kann auf diese Weise nicht zuverlässig realisiert werden.

Des Weiteren ist aus der DE 103 19 212 B4 über eine Stopfbuchse aus Asbest, die Ventilstange in Richtung des Aktors zwischen dem Aktor und der Führungsbuchse abzudichten. Dies führt jedoch zu deutlich erhöhten Stellkräften und ist lediglich für pneumatisch betätigte Ventile geeignet, welche lediglich eine offene Stellung und eine geschlossene Stellung aufweisen.

Zusätzlich ist aus der JP H06 280686 A ein Abgasrückführventil mit einem pneumatischen Aktor bekannt, bei dem zwischen Ventilschließglied und einer Lagerbuchse zur Abdichtung der Ventilstange ein Metallfaserring angeordnet ist.

Des Weiteren wird in der US 2011/0094481 A1 ein Abgasrückführventil offenbart, dessen Ventilstange durch ein in einer Abschirmhülse angeordnetes Drahtgeflecht abgedichtet wird. Die Abschirmhülse ist zwischen dem Schließglied und der Lagerbuchse angeordnet.

Des Weiteren ist aus der US 2003/0006390 A1 ein Ventil bekannt, dessen Ventilstange in einer Führungsbuchse geführt wird, die von einer Abschirmhülse umgeben ist. Am zum Ventilkörper weisenden Ende ist in der Abschirmhülse ein Faserring angeordnet, der gegen eine Einschnürung der Führungsbuchse anliegt und in die Hülse geklebt ist.

Problematisch ist somit, dass keine ausreichende Langlebigkeit der Führungsbuchse gewährleistet werden kann, wodurch eine Leichtgängigkeit der Ventilstange sichergestellt würde, da ein Eindringen von Partikeln in den Spalt zwischen der Ventilstange und der Führungsbuchse nicht ausreichend verhindert wird. Des Weiteren kann ein Eindringen von Gas in Richtung des Aktors nicht ausgeschlossen werden, wodurch die thermische Belastung steigt, so dass häufig zusätzliche Kühlungen des Aktors notwendig werden.

Es stellt sich daher die Aufgabe, ein Abgasventil für eine Verbrennungskraftmaschine bereit zu stellen, welches über eine lange Lebensdauer sowohl ein Eindringen von Partikeln als auch von Abgasen in Richtung des Aktors deutlich reduziert und gleichzeitig die notwendigen Stellkräfte auch nach vielen Gebrauchsstunden gering hält, indem möglichst Schäden an der Führungsbuchse oder der Ventilstange vermieden werden. Gleichzeitig soll der Verschleiß reduziert werden. Dennoch soll dieses möglichst kostengünstig mit geringem Herstellungs- und Montageaufwand hergestellt werden können.

Diese Aufgabe wird durch ein Abgasventil für eine Verbrennungskraftmaschine mit den Merkmalen des Hauptanspruchs 1 gelöst.

Dadurch, dass mindestens ein im verbauten Zustand verpresster Faserring als Dichtmittel die Ventilstange umgibt und axial zwischen dem Ventilkörper und der Führungsbuchse angeordnet ist, wobei eine Abschirmhülse an der Führungsbuchse befestigt ist und der mindestens eine Faserring von der Abschirmhülse radial umgeben ist und die Abschirmhülse einen sich radial nach innen erstreckenden Abschnitt aufweist, gegen den der mindestens eine Faserring axial anliegt, wobei der mindestens eine Faserring im verpressten Zustand einen Außendurchmesser aufweist, der dem Außendurchmesser des von der Abschirmhülse umgebenen axialen Abschnitts der Führungsbuchse entspricht und die Abschirmhülse radial gegen diesen Abschnitt der Führungsbuchse und den mindestens einen verpressten Faserring anliegt, wobei der mindestens eine Faserring zwischen dem sich radial erstreckenden Abschnitt der Abschirmhülse und dem zum Ventilkörper gerichteten axialen Ende des axialen Abschnitts der Führungsbuchse, der den gleichen Außendurchmesser aufweist wie der mindestens eine Faserring, eingepresst ist, wird sowohl ein Eindringen von Gasen und Partikeln in den Spalt zwischen der Führungsbuchse und der Ventilstange verhindert als auch ein Durchdringen dieses Spaltes in Richtung des Aktors, so dass auch die thermische Belastung des Aktors reduziert wird. So wird durch Reduzierung des Verschleißes die Lebensdauer des Abgasventils deutlich erhöht. Dabei bleiben die Herstellkosten sowie der Montageaufwand aufgrund der geringen Teileanzahl gering. Zusätzlich weist der mindestens eine Faserring im verpressten Zustand einen Außendurchmesser auf, der dem Außendurchmesser des von der Abschirmhülse umgebenen axialen Abschnitts der Führungsbuchse entspricht. Des Weiteren liegt die Abschirmhülse radial gegen diesen Abschnitt der Führungsbuchse und den mindestens einen verpressten Faserring an. So kann die Abschirmhülse mit einer zylindrischen Mantelfläche hergestellt werden und bei der Montage über einen entsprechenden Abschnitt der Führungsbuchse geschoben werden, um den Faserring zu verpressen. Auch kann direkt durch die Abschirmhülse die Verpressung des Faserringes sowohl axial als auch radial erfolgen, wodurch die Montage vereinfacht und der Faserring vor weiteren Einflüssen von außen geschützt ist. Für die Montage und Verpressung sind keine weiteren Bauteile erforderlich. Eine derartig geformte Hülse kann einfach durch Strangpressen hergestellt werden. Die anschließende Montage erfolgt ohne zusätzliche notwendige Bauteile zur Zwischenlage. Auch werden zusätzliche Bauteile vermieden und das Eindringen der Schmutzstoffe oder Gase unmittelbar an der Position verhindert, welche vor Verschleiß geschützt werden soll.

Um auf weitere Befestigungsschritte oder Befestigungsmittel verzichten zu können, ist die Abschirmhülse durch eine Pressverbindung an der Führungsbuchse befestigt.

In einer vorteilhaften Ausgestaltung der Erfindung weist die Führungsbuchse einen Absatz auf, gegen den die Abschirmhülse mit einem am ersten Ende der Abschirmhülse ausgebildeten Kragen anliegt. Dies dient der einfachen Lagefixierung der Abschirmhülse und somit der Faserringe zur Führungsbuchse, verhindert Montagefehler und legt den Grad der Verpressung der Faserringe fest.

Um eine solche Verpressung sicher zu stellen, ist ein Abstand zwischen dem sich radial nach innen erstreckenden Abschnitt der Abschirmhülse und dem Kragen der Abschirmhülse kleiner als die Summe der axialen Länge des von der Abschirmhülse radial umgebenen Abschnitts der Führungsbuchse und der axialen Höhe des mindestens einen Faserringes im unverpressten Zustand.

Eine noch bessere Abdichtung ergibt sich, wenn zumindest zwei Faserringe axial übereinander angeordnet sind.

Vorzugsweise ist der mindestens eine Faserring aus Aramidfilzmatten, Edelstahlfilzmatten, Glasfaserfilzmatten, Silikatfasermatten oder Keramikfilzmatten. Diese Materialien sind einerseits unempfindlich gegen thermische Belastung und korrosive Umgebung und bieten andererseits durch das faserige Material sehr gute Dichtungseigenschaften.

Ein zusätzlicher Schutz vor einem Eindringen des Abgases zum Aktor und der daraus folgenden thermischen Belastung wird erreicht, wenn an dem zum verpressten Faserring entgegengesetzten Ende der Führungsbuchse ein Lippendichtring angeordnet ist, der die Ventilstange umgibt.

Des Weiteren kann vorteilhafterweise in der Führungsbuchse eine Entlüftungsbohrung ausgebildet sein, die dazu dient, einen Druckausgleich zwischen den axial entgegengesetzten Seiten der Faserringe herzustellen, wodurch Druckdifferenzen, durch die Abgas entlang der Ventilstange gedrückt wird, beispielsweise durch auftretende Abgaspulsationen, zu verhindern.

Eine Verpressung, bei der eine ausreichende Leichtgängigkeit der Ventilstange bei gleichzeitiger guter Abdichtwirkung erzielt werden kann liegt vor, wenn der Innendurchmesser kleiner, der Außendurchmesser und die Höhe jedes Faserringes im unverpressten Zustand 0,5 bis 1,5 mm größer ist als im verpressten Zustand.

Es wird somit ein Abgasventil mit einer deutlich erhöhten Dichtigkeit über die Lebensdauer geschaffen, welches leicht zu montieren ist und kostengünstig hergestellt werden kann, da die Anzahl der verwendeten Bauteile gering bleibt. So wird bei einem derartigen Ventil der Verschleiß deutlich reduziert, da Ablagerungen und dadurch folgende Beschädigungen, wie Riefen, an der Ventilstange verhindert werden. Auch die thermische Belastung des Aktors wird durch die erhöhte Dichtigkeit verringert.

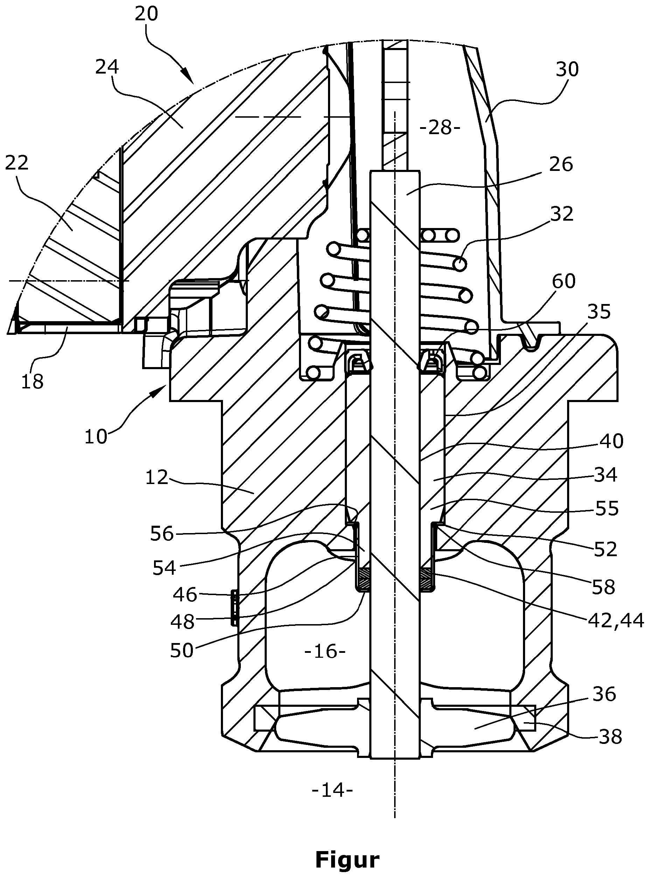

Ein Ausführungsbeispiel eines erfindungsgemäßen Abgasventils für einen Verbrennungsmotor ist in der Figur dargestellt und wird nachfolgend beschrieben.

Die Figur zeigt einen Ausschnitt einer Seitenansicht eines erfindungsgemäßen Abgasventils in geschnittener Darstellung.

Das erfindungsgemäße Abgasventil weist ein Gehäuse 10 auf, welches aus einem Strömungsgehäuse 12 mit einem Einlass 14 und einem Auslass 16 für das Abgas sowie einem Aktorgehäuse 18 besteht. Im Aktorgehäuse 18 ist ein Aktor 20 ausgebildet, der aus einem Elektromotor 22 sowie einem vom Elektromotor 22 angetriebenen Getriebe 24 besteht, über welches die Bewegung des Elektromotors 22 auf eine Ventilstange 26 untersetzt übertragen wird. Hierzu weist das Getriebe 24 einen nicht dargestellten Exzenter auf, der mit einer nicht dargestellten Kulisse zusammenwirkt, wodurch die rotatorische Bewegung des Elektromotors 22 in eine translatorische Bewegung der Ventilstange 26 übertragen wird, die mit der Kulisse zumindest wirkverbunden ist. Die Kulisse und der Exzenter ragen in einen Getrieberaum 28, der durch eine Abdeckkappe 30 geschlossen wird, welche ebenso wie das Aktorgehäuse 18 am Strömungsgehäuse 12 befestigt ist. Im Getrieberaum 28 ist zusätzlich eine die Ventilstange 26 radial umgebende Rückstellfeder 32 angeordnet, die sich auf dem Strömungsgehäuse 12 abstützt und das Abgasventil in Schließrichtung vorspannt.

Die Ventilstange 26 ist in einer Führungsbuchse 34 gelagert, welche in einer Bohrung 35 des Strömungsgehäuses 12 befestigt ist. Am zum Aktor 20 entgegengesetzten Ende der Ventilstange 26 ist ein Ventilkörper 36 befestigt, der mit einem Ventilsitz 38 zusammenwirkt, der zwischen dem Einlass 14 und dem Auslass 16 im Strömungsgehäuse 12 ausgebildet ist. Durch Betätigung des Aktors 20 wird so der Ventilkörper 36 über die Ventilstange 26 entgegen der Kraft der Rückstellfeder 32 vom Ventilsitz 38 abgehoben oder durch die Kraft der Rückstellfeder 32 auf diesen abgesenkt und somit der freie Durchströmungsquerschnitt zwischen dem Einlass 14 und dem Auslass 16 geregelt.

Um einen Spalt 40 zwischen der Ventilstange 26 und der Führungsbuchse 34 abzudichten sind die Ventilstange 26 radial umgebende Dichtmittel 42 vorgesehen. Diese bestehen im vorliegenden Ausführungsbeispiel aus zwei übereinander liegenden Faserringen 44, welche aus Filzmatten beispielsweise aus Aramid, Edelstahl, Glasfasern, Silikatfasern oder Keramiken bestehen. Zur Montage werden die beiden Faserringe 44 in eine Abschirmhülse 46 eingelegt, welche eine zylindrische Mantelfläche 48 aufweist, an deren ersten axialen Ende ein sich radial nach innen erstreckenden ringförmigen Abschnitt 50 und an deren entgegengesetzten axialen Ende ein nach außen weisender ringförmiger Kragen 52 ausgebildet ist. Die Mantelfläche 48 weist einen Innendurchmesser auf, der beispielsweise etwa 1mm kleiner ist als der Außendurchmesser der Faserringe 44 im unverpressten Zustand, während der Innendurchmesser des sich radial nach innen erstreckenden Abschnitts 50 geringfügig größer ist als der Durchmesser der Ventilstange 26. Entsprechend werden die Faserringe 44 radial beim Einlegen leicht verformt gegen den sich radial erstreckenden Abschnitt 50 der Abschirmhülse 46 geschoben. Anschließend wird die Abschirmhülse 46 auf einen Abschnitt 54 der Führungsbuchse 34 geschoben, der zum Ventilkörper 36 weist und im Vergleich zu einem zum Aktor 20 weisenden Abschnitt 55 der Führungsbuchse 34 einen absatzförmig verringerten Durchmesser aufweist. Die Länge dieses Abschnitts 54 verringerten Durchmessers addiert mit der Höhe der beiden gestapelten Fasserringe 44 im unverbauten Zustand ist etwa 1 bis 2 mm größer als die axiale Länge der Mantelfläche 48 der Abschirmhülse 46. Durch ein Aufschieben der Abschirmhülse 46 über den Abschnitt 54 verringerten Durchmessers der Führungsbuchse 34 bis der Kragen 52 der Abschirmhülse 46 gegen einen Absatz 56 anliegt, der zwischen den beiden Abschnitten 54, 55 der Führungsbuchse 34 ausgebildet ist, entsteht entsprechend eine Verpressung der beiden Faserringe 44 in axialer Richtung. Die Abschirmhülse 46 weist zur Führungsbuchse 34 eine Presspassung auf, so dass die Abschirmhülse 46 in dieser die Faserringe 44 verpressenden Position verbleibt.

Anschließend wird der Verbund aus Führungsbuchse 34, Abschirmhülse 46 und Faserringen 44 von der Aktorseite in die Bohrung 35 geschoben, welche ebenfalls einen Absatz 58 aufweist, von dem aus sich die Bohrung 35 mit verringertem Durchmesser weiter in Richtung des Ventilkörpers 36 erstreckt, bis der Kragen 52 zwischen dem Absatz 56 der Führungsbuchse 34 und dem Absatz 58 der Bohrung 35 eingeklemmt ist, so dass die Abschirmhülse 46 sich nicht mehr lösen kann. Auf das zu den Faserringen 44 entgegengesetzte Ende der Führungsbuchse 34 wird in der vorliegenden Ausführungsform noch ein Lippendichtring 60 aufgesetzt und die Ventilstange 26 eingeschoben und mit dem Getriebe 24 verbunden. Die Ventilstange weist ebenfalls einen Durchmesser auf, der etwa 1 mm größer ist als der Innendurchmesser der Faserringe 44, wodurch ein gute Abdichtung der Ventilstange 26 entsteht, da die Faserringe 44 direkt radial gepresst gegen die Ventilstange 26 anliegen.

Das erfindungsgemäße Abgasventil ist entsprechend einfach zu montieren und weist sowohl zwischen dem Gehäuse und der Abschirmhülse als auch zwischen der Abschirmhülse und der Führungsbuchse und auch zwischen der Ventilstange und der Führungsbuchse eine hohe Dichtigkeit auf, so dass ein Eindringen von Gasen oder Partikeln in Richtung des Aktors zuverlässig verhindert wird. Insbesondere im Bereich des als Spielpassung auszuführenden Spaltes zwischen der Ventilstange und der Führungsbuchse weist dieses Abgasventil im Vergleich zu bekannten Ausführungen eine verbesserte Abdichtung auf, so dass die Ventilstange und die Führungsbuchse vor Ablagerungen, die zu Riefen an der Ventilstange oder der Führungsbuchse führen, geschützt sind, wodurch der Verschleiß deutlich reduziert wird und so die Lebensdauer erhöht wird. Zusätzlich wird eine Anlagerung von Partikeln auf der Stange oder an der Innenseite der Führungsbuchse vermieden, was sonst zu einem Verklemmen der Ventilstange in der Führungsbuchse führen könnte.

## Patentansprüche

1. Abgasventil für eine Verbrennungskraftmaschine mit
einem Aktor (20),
einer Ventilstange (26), welche mittels des Aktors (20) bewegbar ist,
einem Ventilkörper (36), der an der Ventilstange (26) befestigt ist,
einem Ventilsitz (38), auf den der Ventilkörper (36) absenkbar ist und von dem der Ventilkörper (36) abhebbar ist,
einer Führungsbuchse (34), welche in einem Gehäuse (10) angeordnet ist und über welches die Ventilstange (26) im Gehäuse (10) gelagert ist,
Dichtmitteln (42) zur Abdichtung eines Spaltes (40) zwischen der Führungsbuchse (34) und der Ventilstange (26),
wobei mindestens ein im verbauten Zustand verpresster Faserring (44) als Dichtmittel (42) die Ventilstange (26) umgibt und axial zwischen dem Ventilkörper (36) und der Führungsbuchse (34) angeordnet ist, wobei eine Abschirmhülse (46) an der Führungsbuchse (34) befestigt ist und der mindestens eine Faserring (44) von der Abschirmhülse (46) radial umgeben ist und die Abschirmhülse (46) einen sich radial nach innen erstreckenden Abschnitt (50) aufweist, gegen den der mindestens eine Faserring (44) axial anliegt, wobei der mindestens eine Faserring (44) im verpressten Zustand einen Außendurchmesser aufweist, der dem Außendurchmesser des von der Abschirmhülse (46) umgebenen axialen Abschnitts (54) der Führungsbuchse (34) entspricht und die Abschirmhülse (46) radial gegen diesen Abschnitt (54) der Führungsbuchse (34) und den mindestens einen verpressten Faserring (44) anliegt, wobei der mindestens eine Faserring (44) zwischen dem sich radial erstreckenden Abschnitt (50) der Abschirmhülse (46) und dem zum Ventilkörper (36) gerichteten axialen Ende des axialen Abschnitts (54) der Führungsbuchse (34), der den gleichen Außendurchmesser aufweist wie der mindestens eine Faserring (44), eingepresst ist.

2. Abgasventil für eine Verbrennungskraftmaschine nach Anspruch 1,
**dadurch gekennzeichnet, dass**
die Abschirmhülse (46) durch eine Pressverbindung an der Führungsbuchse (34) befestigt ist.

3. Abgasventil für eine Verbrennungskraftmaschine nach einem der vorhergehenden Ansprüche,
**dadurch gekennzeichnet, dass**
die Führungsbuchse (34) einen Absatz (58) aufweist, gegen den die Abschirmhülse (46) mit einem am ersten axialen Ende der Abschirmhülse (46) ausgebildeten Kragen (52) anliegt.

4. Abgasventil für eine Verbrennungskraftmaschine nach Anspruch 3,
**dadurch gekennzeichnet, dass**
ein Abstand zwischen dem sich radial nach innen erstreckenden Abschnitt (50) der Abschirmhülse (46) und dem Kragen (52) der Abschirmhülse (46) kleiner ist als die Summe der axialen Länge des von der Abschirmhülse (46) radial umgebenen Abschnitts (54) der Führungsbuchse (34) und der axialen Höhe des mindestens einen Faserringes (44) im unverpressten Zustand.

5. Abgasventil für eine Verbrennungskraftmaschine nach einem der vorhergehenden Ansprüche,
**dadurch gekennzeichnet, dass**
zumindest zwei Faserringe (44) axial übereinander angeordnet sind.

6. Abgasventil für eine Verbrennungskraftmaschine nach einem der vorhergehenden Ansprüche,
**dadurch gekennzeichnet, dass**
der mindestens eine Faserring (44) aus Aramidfilzmatten, Edelstahlfilzmatten, Glasfaserfilzmatten, Silikatfasermatten oder Keramikfilzmatten ist.

7. Abgasventil für eine Verbrennungskraftmaschine nach einem der vorhergehenden Ansprüche,
**dadurch gekennzeichnet, dass**
an dem zum verpressten Faserring (44) entgegengesetzten Ende der Führungsbuchse (34) ein Lippendichtring (60) angeordnet ist, der die Ventilstange (26) umgibt.

8. Abgasventil für eine Verbrennungskraftmaschine nach einem der vorhergehenden Ansprüche,
**dadurch gekennzeichnet, dass**
in der Führungsbuchse (34) eine Entlüftungsbohrung ausgebildet ist.

9. Abgasventil für eine Verbrennungskraftmaschine nach einem der vorhergehenden Ansprüche,
**dadurch gekennzeichnet, dass**
der Innendurchmesser kleiner, der Außendurchmesser und die Höhe jedes Faserringes (44) im unverpressten Zustand 0,5 bis 1,5 mm größer ist als im verpressten Zustand.

## Claims

1. Exhaust valve for an internal combustion engine with
an actuator (20)
a valve rod (26) which is movable via the actuator (20), and
a valve body (36) which is fastened to the valve rod (26)
a valve seat (38) onto which the valve body (36) can be lowered and from which the valve body (36) can be lifted off
a guide bushing (34), which is arranged in a housing (10) and via which the valve rod (26) is beared in the housing (10),
sealing means (42) for sealing a gap (40) between the guide bushing (34) and the valve rod (26),
wherein
at least one fiber ring (44) pressed in the assembled state surrounding the valve rod (26) as sealing means (42) and being arranged axially between the valve body (36) and the guide bushing (34) wherein a shielding sleeve (46) is fastened to the guide bushing (34) and the at least one fiber ring (44) is radially surrounded by the shielding sleeve (46) and the shielding sleeve (46) has a radially inwardly extending section (50) against which the at least one fiber ring (44) axially abuts, wherein the at least one fiber ring (44) in the compressed state has an outer diameter which corresponds to the outer diameter of the axial section (54) of the guide bushing (34) surrounded by the shielding sleeve (46), and the shielding sleeve (46) abuts radially against this section (54) of the guide bushing (34) and the at least one pressed fiber ring (44), wherein the at least one fiber ring (44) is pressed in between the radially extending section (50) of the shielding sleeve (46) and the axial end of the axial section (54) of the guide bushing (34) directed towards the valve body (36), which has the same outer diameter as the at least one fiber ring (44).

2. Exhaust valve for an internal combustion engine according to claim 1,
**characterized in that**
the shielding sleeve (46) is fixed to the guide bushing (34) by a press-fit connection.

3. Exhaust valve for an internal combustion engine according to any one of the preceding claims,
**characterized in that**
the guide bushing (34) has a shoulder (58) against which the shielding sleeve (46) rests with a collar (52) formed at the first axial end of the shielding sleeve (46).

4. Exhaust valve for an internal combustion engine according to claim 3,
**characterized in that**
a distance between the radially inwardly extending portion (50) of the shielding sleeve (46) and the collar (52) of the shielding sleeve (46) is smaller than the sum of the axial length of the portion (54) of the guide bushing (34) radially surrounded by the shielding sleeve (46) and the axial height of the at least one fiber ring (44) in the unpressed state.

5. Exhaust valve for an internal combustion engine according to one of the preceding claims,
**characterized in that**
at least two fiber rings (44) are arranged axially one above the other.

6. Exhaust valve for an internal combustion engine according to one of the preceding claims,
**characterized in that**
the at least one fiber ring (44) is made of aramid felt mats, stainless steel felt mats, glass fiber felt mats, silicate fiber mats or ceramic felt mats.

7. Exhaust valve for an internal combustion engine according to any one of the preceding claims,
**characterized in that**
a lip seal ring (60) is arranged at the end of the guide bushing (34) opposite to the pressed fiber ring (44) and surrounds the valve rod (26).

8. Exhaust valve for an internal combustion engine according to one of the preceding claims,
**characterized in that**
a venting bore is formed in the guide bushing (34).

9. Exhaust valve for an internal combustion engine according to one of the preceding claims,
**characterized in that**
the inner diameter is smaller, the outer diameter and the height of each fiber ring (44) is 0.5 to 1.5 mm larger in the unpressed state than in the pressed state.

## Revendications

1. Soupape d'échappement pour un moteur à combustion interne avec
un actionneur (20),
une tige de vanne (26), qui peut être déplacée au moyen de l'actionneur (20),
un corps de vanne (36), qui est fixé à la tige de vanne (26),
un siège de vanne (38), sur lequel le corps de vanne (36) peut être abaissé et duquel le corps de vanne (36) peut être soulevé,
une douille de guidage (34) qui est disposée dans un boîtier (10) et par laquelle la tige de vanne (26) est supportée dans le boîtier (10), des moyens d'étanchéité (42) pour rendre étanche une fente (40) entre la douille de guidage (34) et la tige de vanne (26),
où
au moins une bague en fibres (44) comprimée à l'état monté entoure la tige de vanne (26) en tant que moyen d'étanchéité (42) et est disposée axialement entre le corps de vanne (36) et la douille de guidage (34), une douille de protection (46) étant fixée à la douille de guidage (34) et l'au moins un anneau de fibres (44) étant entouré radialement par la douille de protection (46) et la douille de protection (46) comprenant une section (50) s'étendant radialement vers l'intérieur, contre laquelle l'au moins un anneau de fibres (44) s'applique axialement, l'au moins un anneau de fibres (44) comprenant à l'état comprimé un diamètre extérieur, qui correspond au diamètre extérieur de la section axiale (54) de la douille de guidage (34) entourée par la douille de protection (46) et la douille de protection (46) s'appuie radialement contre cette section (54) de la douille de guidage (34) et contre l'au moins une bague à fibres (44) comprimée, l'au moins un anneau de fibres (44) étant pressé entre la section (50) de la douille de protection (46) qui s'étend radialement et l'extrémité axiale, orientée vers le corps de vanne (36), de la section axiale (54) de la douille de guidage (34) qui comprend le même diamètre extérieur que l'au moins un anneau de fibres (44).

2. Soupape d'échappement pour un moteur à combustion interne selon la revendication 1,
**caractérisé en ce que**
la douille de protection (46) est fixée à la douille de guidage (34) par une liaison par pression.

3. Soupape d'échappement pour un moteur à combustion interne selon l'une des revendications précédentes,
**caractérisé en ce que**
la douille de guidage (34) comprend un épaulement (58) contre lequel la douille de protection (46) s'appuie avec un collier (52) formé à la première extrémité axiale de la douille de protection (46).

4. Soupape d'échappement pour un moteur à combustion interne selon la revendication 3,
**caractérisé en ce que**
une distance entre la section (50) de la douille de protection (46) s'étendant radialement vers l'intérieur et le collier (52) de la douille de protection (46) est inférieure au total de la longueur axiale de la section (54) de la douille de guidage (34) entourée radialement par la douille de protection (46) et de la hauteur axiale de l'au moins un anneau de fibres (44) à l'état non comprimé.

5. Soupape d'échappement pour un moteur à combustion interne selon l'une des revendications précédentes,
**caractérisé en ce que**
au moins deux anneaux de fibres (44) sont disposés axialement l'un au-dessus de l'autre.

6. Soupape d'échappement pour un moteur à combustion interne selon l'une des revendications précédentes,
**caractérisé en ce que**
l'au moins un anneau de fibres (44) est constitué de mats de feutre d'aramide, de mats de feutre d'acier inoxydable, de mats de feutre de fibres de verre, de mats de fibres de silicate ou de mats de feutre de céramique.

7. Soupape d'échappement pour un moteur à combustion interne selon l'une des revendications précédentes,
**caractérisé en ce que**
un joint à lèvre (60) est disposé à l'extrémité de la douille de guidage (34) opposée à la bague en fibres comprimées (44), lequel joint entoure la tige de vanne (26).

8. Soupape d'échappement pour un moteur à combustion interne selon l'une des revendications précédentes,
**caractérisé en ce que**
un trou de ventilation est formé dans la douille de guidage (34).

9. Soupape d'échappement pour un moteur à combustion interne selon l'une des revendications précédentes,
**caractérisé en ce que**
le diamètre intérieur est plus petit, le diamètre extérieur et la hauteur de chaque anneau de fibres (44) sont plus grands de 0,5 à 1,5 mm à l'état non comprimé qu'à l'état comprimé.
